Europäisches Patentamt

European Patent Office

Office européen des brevets

(19)

(11)   **EP 1 446 711 B1**

(12)   **EUROPÄISCHE PATENTSCHRIFT**

(45) Veröffentlichungstag und Bekanntmachung des Hinweises auf die Patenterteilung:
**05.10.2005   Patentblatt 2005/40**

(51) Int Cl.$^7$: **G06F 1/00**

(21) Anmeldenummer: 03702419.7

(86) Internationale Anmeldenummer:
**PCT/EP2003/000181**

(22) Anmeldetag: **10.01.2003**

(87) Internationale Veröffentlichungsnummer:
**WO 2003/060692 (24.07.2003 Gazette 2003/30)**

(54) **SCHIEBEVORRICHTUNG UND VERFAHREN ZUM VERSCHIEBEN**

SHIFTING DEVICE AND SHIFTING METHOD

DISPOSITIF DE DECALAGE ET PROCEDE DE DECALAGE

(84) Benannte Vertragsstaaten:
**DE FR**

(30) Priorität: **16.01.2002   DE 10201441**

(43) Veröffentlichungstag der Anmeldung:
**18.08.2004   Patentblatt 2004/34**

(73) Patentinhaber: **Infineon Technologies AG**
**81669 München (DE)**

(72) Erfinder:
 • **GAMMEL, Berndt,**
   **85570 Markt Schwaben (DE)**
 • **KLUG, Franz**
   **81739 München (DE)**
 • **KNIFFLER, Oliver**
   **81739 München (DE)**

(74) Vertreter: **Schoppe, Fritz et al**
**Patentanwälte**
**Schoppe, Zimmermann, Stöckeler & Zinkler**
**Postfach 246**
**82043 Pullach bei München (DE)**

(56) Entgegenhaltungen:
**WO-A-01/40950         WO-A-01/54083**
**WO-A-99/60534         US-A- 5 262 971**

 • **KUHN M G: "CIPHER INSTRUCTION SEARCH ATTACK ON THE BUS-ENCRYPTION SECURITY MICROCONTROLLER DS5002FP" IEEE TRANSACTIONS ON COMPUTERS, IEEE INC. NEW YORK, US, Bd. 47, Nr. 10, 1. Oktober 1998 (1998-10-01), Seiten 1153-1157, XP000781996 ISSN: 0018-9340**
 • **WWW.ARCHIVE.ORG, [Online] 4. Dezember 2000 (2000-12-04), Seiten 1-8, XP002247737 Gefunden im Internet: <URL:www.logosec.de> [gefunden am 2003-07-18]**

**Beschreibung**

Die vorliegende Erfindung bezieht sich auf Rechenwerke und insbesondere auf eine Schiebevorrichtung zum Verschieben einer ersten Stelle eines Datenworts, das aus einer Mehrzahl von Stellen besteht, an eine zweite Stelle, um ein verschobenes Datenwort zu erhalten.

In typischen CPUs stellt die Schiebeoperation eine wichtige Funktion dar. Dadurch können beispielsweise Multiplikations- oder Divisionsalgorithmen implementiert werden. Bekannte CPUs arbeiten mit Klartextdaten, die um n Positionen nach links oder rechts geschoben oder rotiert werden können. Hierfür stehen unterschiedliche Schiebewerke, wie z. B. Barrel-Shifter oder logarithmische Shifter, zur Verfügung. Im allgemeinen handelt es sich um einen Permutator, der ein beliebiges Bit von Position i auf Position j bringt.

Nachteilig an solchen Schiebevorrichtungen für bekannte CPUs ist, daß sie nur mit Klartextdaten korrekt arbeiten. Hierdurch werden Angriffsmöglichkeiten relevant, die entweder auf Nadelangriffen (Probing) oder auf einer einfachen Leistungsanalyse (SPA; SPA = Simple Power Analysis) oder einer Differenz-Leistungsanalyse (DPA; DPA = Differential Power Analysis) basieren. Um in Prozessoren die Sicherheit gegenüber solchen Angriffen zu verbessern, wurde bereits eine Busverschlüsselung eingeführt. Dies bedeutet, daß Daten, die auf Bussen übertragen werden, verschlüsselt sind und, bevor sie in die CPU eingespeist werden, entschlüsselt werden, damit die CPU korrekte Rechenoperationen im Klartextraum ausführen kann. Das Ergebnis einer Operation wird dann wieder verschlüsselt und in verschlüsseltem Zustand über einen Bus entweder zu einem Cache oder einem externen Speicher (extern bezüglich der CPU) übertragen.

Damit wird es einem Angreifer unmöglich gemacht, Daten, die auf einem internen Bus transportiert werden, abzuhören, da er, wenn er abhören möchte, lediglich die verschlüsselten Daten erhält. Greift der Angreifer jedoch den Eingang oder den Ausgang des Rechenwerks an, oder Zwischenzustände im Rechenwerk, so kann er Klartextdaten abhören, da das Rechenwerk im Klartextraum arbeitet. Obgleich die dort abzuhörenden Strukturen wesentlich kleiner und weniger regelmäßig sind als Busstrukturen, stellt dies doch einen Angriffspunkt dar.

Die Aufgabe der vorliegenden Erfindung besteht darin, ein sichereres Konzept zum Verschieben von Daten zu schaffen.

Diese Aufgabe wird durch eine Schiebevorrichtung gemäß Patentanspruch 1 oder durch ein Verfahren gemäß Patentanspruch 7 gelöst.

Der vorliegenden Erfindung liegt die Erkenntnis zugrunde, daß die Schiebeoperation im Geheimtextraum, d. h. mit verschlüsselten Daten, durchgeführt werden muß, um die Angriffspunkte zu vermeiden, bei denen Daten im Klartextraum vorliegen. Nachdem unterschiedliche Stellen des Datenworts unterschiedlich verschlüsselt sind, muß zusätzlich zu einer Schiebeoperation einer ersten Stelle eines Datenworts an eine zweite Stelle eines Datenworts eine Umverschlüsselung stattfinden, und zwar dahingehend, daß die Stelle des Datenworts, die mit einem Verschlüsselungsparameter für die erste Stelle verschlüsselt in die Schiebevorrichtung eingespeist wird, mit dem Verschlüsselungsparameter für die zweite Stelle verschlüsselt die Schiebevorrichtung verläßt. Zu diesem Zweck ist eine Umverschlüsselungsvorrichtung der ersten Stelle von einer Verschlüsselung unter Verwendung des ersten Verschlüsselungsparameters in einer Verschlüsselung unter Verwendung des Verschlüsselungsparameters vorgesehen. Die Reihenfolge der Schiebeoperation und Umverschlüsselungsoperation ist prinzipiell beliebig. So ist es möglich, die erste Stelle zunächst umzuverschlüsseln und dann zu verschieben. Alternativ kann jedoch auch die erste Stelle zunächst verschoben werden und dann umverschlüsselt werden.

Vorzugsweise wird die Umverschlüsselung derart durchgeführt, daß während der Umverschlüsselung keine Klartextdaten vorliegen. Dies wird dadurch erreicht, daß eine Entschlüsselung der ersten Stelle in den Klartextraum unter Verwendung des ersten Verschlüsselungsparameters und eine Verschlüsselung der im Klartextraum vorliegenden ersten Stelle unter Verwendung eines Verschlüsselungsparameters für die zweite Stelle in eine Operation zusammengefaßt werden, bei der als Zwischenergebnisse keine Klartextdaten auftreten.

Vorzugsweise wird als Verschlüsselungsalgorithmus eine bitweise XOR-Verknüpfung oder XNOR-Verknüpfung mit einem Verschlüsselungsparameter eingesetzt, wobei die Verschlüsselungsparameter für die einzelnen Stellen des Datenworts voneinander unabhängig sind. Eine Umkehrung der XOR-Operation bzw. der XNOR-Operation entspricht wieder der XOR- bzw. XNOR-Operation. Eine Umverschlüsselung von einer Verschlüsselung mit einem ersten Verschlüsselungsparameter in eine Verschlüsselung mit einem zweiten Verschlüsselungsparameter kann bei Anwendung der XOR-Funktion schaltungstechnisch einfach und mit geringem Platzbedarf dadurch erreicht werden, daß ein Umverschlüsselungs-Schlüssel berechnet wird, der einer XOR-Verknüpfung bzw. XNOR-Verknüpfung des ersten Verschlüsselungsparameters und des zweiten Verschlüsselungsparameters entspricht. Die Umverschlüsselung wird dann dadurch erreicht, daß die mit dem ersten Verschlüsselungsparameter verschlüsselte erste Stelle des Datenworts mit dem Umverschlüsselungsschlüssel XOR- bzw. XNOR-verknüpft wird, um eine Stelle des Datenworts zu erhalten, die mit dem zweiten Verschlüsselungsparameter für die zweite Stelle verschlüsselt ist. Bei der XOR- bzw. XNOR-Verknüpfung mit dem Umverschlüsselungs-Schlüssel treten keine Klartextdaten auf, so daß ein Angreifer keine Chance hat, an irgendeiner Stelle der Schiebevorrichtung Klartextdaten zu hören.

Zum Verschlüsseln können sämtliche umkehrbaren Algorithmen eingesetzt werden. Aus Geschwindigkeitsgründen wird jedoch die XOR- bzw. XNOR-Verschlüsselung bevorzugt.

Erfindungsgemäß werden nunmehr ausschließlich verschlüsselte Daten verschoben. Dadurch werden die Angriffsmöglichkeiten erheblich eingeschränkt.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Blockschaltbild einer erfindungsgemäßen Schiebevorrichtung;

Fig. 2    eine erfindungsgemäße Schiebevorrichtung gemäß einem bevorzugten Ausführungsbeispiel der vorliegenden Erfindung, bei dem die Umverschlüsselung vor der Verschiebung durchgeführt wird; und

Fig. 3    ein Blockschaltbild eines bevorzugten Ausführungsbeispiels der vorliegenden Erfindung, bei dem die Umverschlüsselung nach der Verschiebung durchgeführt wird.

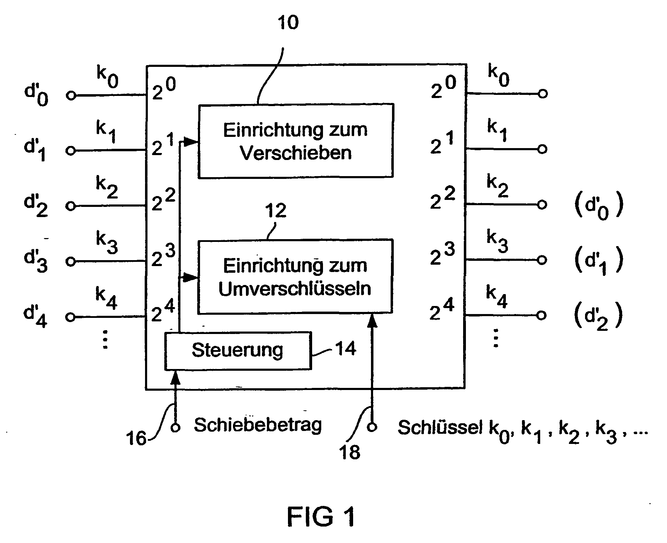

Fig. 1 zeigt eine erfindungsgemäße Schiebevorrichtung, die eine Mehrzahl von Eingängen für verschlüsselte Stellen $d_0'$, $d_1'$, ... eines Datenworts aufweisen, das aus einer oder mehreren verschlüsselten Stellen $d_0'$ ... gebildet ist. Jeder Eingang hat eine bestimmte Wertigkeit, wobei hier beispielsweise im binären Zahlensystem die Wertigkeiten $2^0$, $2^1$, ... in Fig. 1 angegeben sind. Ferner ist jede Stelle des Datenworts d unter Verwendung eines dieser Stelle zugeordneten Verschlüsselungsparameters $k_0$, $k_1$, $k_2$, ..., verschlüsselt. Dies bedeutet, daß die Stelle des Datenworts $d_0'$ mit dem Verschlüsselungsparameter $k_0$ verschlüsselt ist, während die Stelle des Datenworts $d_3'$ beispielsweise nicht mit dem Verschlüsselungsparameter $k_0$, sondern mit dem Verschlüsselungsparameter $k_3$ verschlüsselt ist. An dieser Stelle sei angemerkt, daß verschlüsselte Größen mit einem Apostroph gekennzeichnet sind.

Die erfindungsgemäße Vorrichtung umfaßt ferner eine Einrichtung 10 zum Verschieben einer ersten Stelle des Datenworts an eine zweite Stelle des Datenworts, eine Einrichtung 12 zum Umverschlüsseln der ersten Stelle von einer Verschlüsselung unter Verwendung des Verschlüsselungsparameters für die erste Stelle in eine Verschlüsselung unter Verwendung des Verschlüsselungsparameters, der der zweiten Stelle zugeordnet ist. Die erfindungsgemäße Schiebevorrichtung umfaßt ferner eine Steuereinrichtung 14, die eine Ablaufsteuerung der Einrichtung zum Verschieben 10 und der Einrichtung zum Umverschlüsseln 12 durchführt, daß entweder die erste Stelle zunächst an die zweite Stelle geschoben wird, und daß dann eine Umverschlüsselung vorgenommen wird, oder daß zunächst die verschlüsselte erste Stelle des Datenworts umverschlüsselt wird, und daß dann der umverschlüsselte Wert an die zweite Stelle geschoben wird. Der Steuerung 14 ist über einen Steuereingang 16 ein Schiebebetrag zuführbar, der angibt, um wieviel Stellen ein Wort verschoben werden soll bzw. eine Stelle eines Worts verschoben werden soll. Die Einrichtung 12 zum Umverschlüsseln umfaßt ferner einen Schlüsseleingang 18, über den dieselbe die Schlüssel für die unterschiedlichen Stellen, also die Verschlüsselungsparameter, die den einzelnen Stellen bzw. Eingängen zugeordnet sind, erhalten kann.

Die erfindungsgemäße Schiebevorrichtung umfaßt ferner eine Mehrzahl von Ausgängen, denen eine bestimmte Wertigkeit $2^0$, $2^1$, $2^2$ ... zugeordnet ist, und denen, ebenso wie den Eingängen, die Verschlüsselungsparameter $k_0$, $k_1$, ... zugeordnet sind.

Im nachfolgenden wird anhand eines Beispiels die Verschiebung eines Datenworts anhand von Fig. 1 dargelegt. Es wird davon ausgegangen, daß das verschlüsselte Datenwort d' drei Stellen hat, nämlich $d_0'$, $d_1'$ und $d_2'$. Der am Eingang 16 eingegebene Schiebebetrag beträgt +2, d. h. die drei Stellen des verschlüsselten Datenworts am Eingang der in Fig. 1 gezeigten Vorrichtung sollen jeweils um zwei Stellen nach rechts, d. h. zu höherwertigen Stellen, verschoben werden. Hierzu benötigt die Einrichtung 12 zum Umverschlüsseln die Schlüssel für die betroffenen Stellen, nämlich $k_0$, $k_1$ und $k_2$, da dies die Stellen des Eingangs-Datenworts sind, die von der Schiebeoperation betroffen sind, und zusätzlich die Schlüssel $k_3$ und $k_4$, da dies die Stellen sind, die aufgrund der Verschiebung um zwei Bit nach rechts neu belegt werden.

Für das dargestellte Beispiel sei angenommen, daß die Daten mit den jeweiligen Verschlüsselungsparametern bitweise XORverschlüsselt sind, d. h. $d_i' = d_i$ XOR $k_i$. Prinzipiell ist jedoch jedes beliebige andere umkehrbare Verschlüsselungsverfahren anwendbar.

Der Umverschlüsselungs-Schlüssel zum Umverschlüsseln der ersten Stellen $d_0'$ von der Wertigkeit $2°$ zur Wertigkeit $2^2$ ist gleich einer XOR-Verknüpfung von $k_0$ mit $k_2$. Der Umverschlüsselungs-Schlüssel für die eingangsseitige Stelle mit der Wertigkeit $2^1$ lautet analog dazu $k_1$ XOR $k_3$. Schließlich lautet der Umverschlüsselungs-Schlüssel um das Eingangsdatenbit $d_2'$ zu verschieben: $d_{24} = k_2$ XOR $k_4$. Prinzipiell ist es unerheblich, ob die Daten zunächst umverschlüsselt werden und dann verschoben werden, oder ob die Daten zunächst verschoben werden und dann umverschlüsselt werden. Auf jeden Fall wird sichergestellt, daß immer verschlüsselte Daten verschoben werden. Dies ist insbesondere bei größeren Schiebern von besonderer Bedeutung, da hier Leitungslängen von einem Eingang zu einem Ausgang durchaus beträchtliche Werte annehmen können und somit relativ leicht abhörbar sind. Die erfindungsgemäße Schiebevorrichtung stellt jedoch sicher, daß immer nur verschlüsselte Daten (entweder gemäß dem eingangsseitigen Verschlüsselungsparameter oder gemäß dem ausgangsseitigen Verschlüsselungsparameter) verschoben werden. Obgleich es bevorzugt wird, eine Umverschlüsselung derart durchzuführen, daß während der Umverschlüsselung keine Klartextdaten berechnet werden (in diesem Fall besteht kein Angriffspunkt auf Klartextdaten mehr), wird jedoch auch in dem Fall eine Sicherheitssteigerung erreicht, bei dem die Umverschlüsselung derart vor sich geht, daß zunächst eine Entschlüsselung unter Verwendung des ersten Verschlüsselungsparameters durchgeführt wird, und daß dann eine Verschlüsselung unter Verwendung eines zweiten Verschlüsselungsparameters durchgeführt wird, wobei zwischen Entschlüsselung und Verschlüsselung Klartextdaten vorliegen. Auch in diesem Fall werden lediglich verschlüsselte Daten verschoben, und die Klartextdaten liegen lediglich innerhalb der Umverschlüsselungseinheit vor. Das Ausspähen dieser Daten beispielsweise mittels eines Nadelangriffs ist ungleich schwieriger als das Ausspähen von unverschlüsselt verschobenen Daten.

Es sei darauf hingewiesen, daß Fig. 1 lediglich beispielhaft eine Verschiebung aller Bits um eine Position darstellt. Der erfindungsgemäße Schieber kann als allgemeiner Permutator wirken, bei dem beliebige Bits an beliebige Stellen gebracht werden, wobei immer die entsprechende Umverschlüsselung berücksichtigt wird, damit die korrekte Schlüsselbasis vorliegt. Bei einem Permutator kann auch der Fall auftreten, daß ein Bit nicht verschoben wird. In diesem Fall muß auch nichts umverschlüsselt werden.

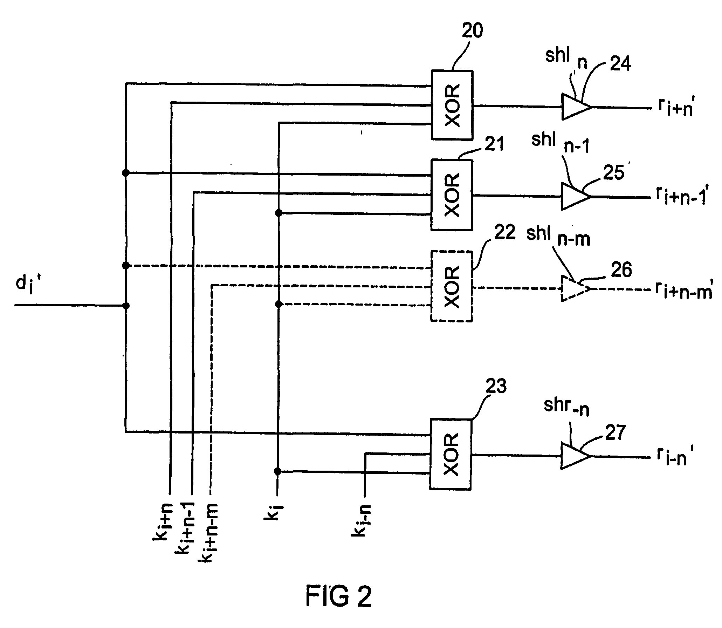

Fig. 2 zeigt eine bevorzugte Ausführungsform für eine erfindungsgemäße Schiebevorrichtung mit bitweiser XOR-Verschlüsselung und Umverschlüsselung vor der Verschiebung. Insbesondere ist in Fig. 2 ein Bit-Slice gezeigt, nämlich für das verschlüsselte Bit des Eingangsdatenwortes $d_i'$. Die Umverschlüsselungseinrichtung umfaßt eine Anzahl von XOR-Gattern 20, 21, 22 und 23. Die Einrichtung zum Verschieben umfaßt eine Anzahl von Schiebeeinrichtungen, die eine Verschiebung um links (SHL; SHL = shift left) oder eine Verschiebung nach rechts (SHR; SHR = shift right) ermöglichen. Das in Fig. 2 gezeigte Prinzip eines verschlüsselten Barrel-Shifters benötigt für jedes Bit zusätzlich (n-1) Dreifach-XOR-Gatter. Für eine 32-Bit-CPU wären das 32 x (n-1) Dreifach-XOR-Gatter an Zusatzaufwand, wobei die Zahl n angibt, um wieviel Stellen eine Verschiebung nach links bzw. rechts maximal möglich ist.

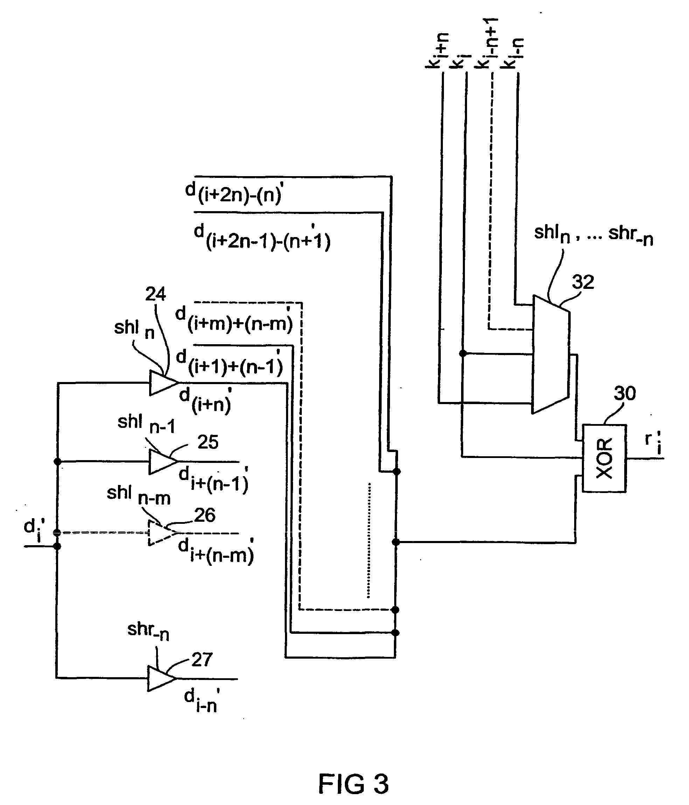

Anstelle einer Umverschlüsselung vor der Schiebeoperation, wie es in Fig. 2 dargestellt ist, kann auch eine Umverschlüsselung nach der Schiebeoperation erreicht werden. Dies ist in Fig. 3 anhand eines Bit-Slices für eine verschlüsselte Stelle $d_i'$ des Datenworts dargestellt. Zunächst wird der verschlüsselte Wert $d_i'$ um n Bit geshiftet und dann mittels des entsprechenden Umverschlüsselungs-Schlüssels umverschlüsselt. Die

Notation $d_{(i+2n)-(n)}'$ bedeutet, daß das Datenbit an der Stelle i+2n um n Positionen nach rechts verschoben wurde. Dieses Zwischenergebnis benötigt noch die Umverschlüsselungsoperation mit dem Umverschlüsselungs-Schlüssel $t_{ij}$, der sich aus einer XOR-Verknüpfung der beiden betroffenen Verschlüsselungsparameter für die beiden betroffenen Stellen, also die Ursprungsstelle und die Zielstelle, ergibt. Gleichungsmäßig bedeutet dies für das Ergebnisbit:

$$r_j' = (d_i' << n) \text{ XOR } t_{ij}$$

Bei dieser Lösung wird für jedes Bit des Resultats $r_i$ zusätzlich ein dreifaches XOR-Gatter 30 sowie ein n-in-1-Multiplexer 32 benötigt. Ferner werden, wie es auch bei Fig. 2 der Fall war, entsprechende Verschiebungseinrichtungen 24, 25, 26 und 27 benötigt, die den entsprechenden Elementen in Fig. 2 entsprechen.

Es sei darauf hingewiesen, daß sich beliebige Shiftalgorithmen auf der Basis der vorstehenden Details implementieren lassen, beispielsweise logarithmische Schieber, etc. Eine Spezialoperation der Verschiebung ist die Rotation eines Worts. Wenn ein Datenwort um eine Stelle nach rechts rotiert werden soll, bedeutet dies, daß das niederstwertige Bit (lsb) des Datenworts vor der Rotation zum höchstwertigen Bit (msb) des Datenworts nach der Rotation wird. Die erste Stelle ist dann das niederstwertige Bit des Datenworts, und die zweite Stelle ist das höchstwertige Bit des Datenworts. Der Umverschlüsselungs-Schlüssel berechnet sich dann auf der Verknüpfung des Verschlüsselungsparameters für das höchstwertige Bit und des Verschlüsselungsparameters für das niederstwertige Bit.

Der erfindungsgemäße Schieber kann auch in Kombination mit einer kompletten ALU verwendet werden, die mit verschlüsselten Daten rechnet, um komplexere Operationen, wie z. B. das Extrahieren von k Bit aus einem Register und Einfügen in ein anderes Register an anderer Bitposition durchzuführen. Allgemein ausgedrückt fungiert der erfindungsgemäße Schieber als Permutator, der beliebige Bitpositionen vertauschen kann. Insbesondere kann bei einem allgemeinen Permutator der Fall auftreten, dass bestimmte Bitpositionen verschoben werden, und damit umverschlüsselt werden müssen, während wieder andere Bitpositionen nicht verschoben werden, und damit auch nicht umverschlüsselt werden müssen.

Es existieren unterschiedliche Möglichkeiten, wie die Bits behandelt werden sollen, die durch die Verschiebung frei werden, wie z. B. das Bit mit der Wertigkeit $2^0$ und $2^1$ von Fig. 1. Sollen - im Klartextraum - hier Nullen eingefügt werden, so wären die Nullen im Geheimtextraum mit den Schlüsseln $k_0$ für die niederstwertige Stelle und $k_1$ für die höherwertigere Stelle zu verschlüsseln. Sollen dagegen beispielsweise aus Vorzeichengründen, Einsen eingefügt werden, so wären diese Einsen ebenfalls mit den Schlüsseln für die entsprechenden Stellen zu verschlüsseln. Wird ferner der Schiebebetrag selbst verschlüsselt, beispielsweise unter Verwendung eines eigenen Verschlüsselungsparameters bzw. eines Verschlüsselungsparameters für die Eingänge, so wäre es einem Angreifer nicht einmal mehr möglich, festzustellen, ob bzw. um wieviel verschoben worden ist. Nachdem hinzugefügte Nullen oder Einsen auf nicht benötigten bzw. frei gewordenen Bitleitungen ebenfalls verschlüsselt sind, ist aus dem Ausgangsbitmuster nicht unbedingt zu ersehen, was innerhalb des verschlüsselten Shifters stattgefunden hat.

Bezugszeichenliste

| 10 | Einrichtung zum Verschieben |
| 12 | Einrichtung zum Umverschlüsseln |
| 14 | Steuerung |
| 16 | Schiebebetrageingang |
| 18 | Schlüsseleingang |
| 20 | erstes XOR-Gatter |
| 21 | zweites XOR-Gatter |
| 22 | drittes XOR-Gatter |
| 23 | viertes XOR-Gatter |
| 24 | erster Schieber |
| 25 | zweiter Schieber |
| 26 | dritter Schieber |
| 27 | vierter Schieber |
| 30 | Ausgangs-XOR-Gatter |
| 32 | Multiplexer |

**Patentansprüche**

1. Schiebevorrichtung zum Verschieben einer ersten Stelle eines Datenworts, das aus einer Mehrzahl von Stellen besteht, an eine zweite Stelle, um ein verschobenes Datenwort zu erhalten, wobei die erste Stelle unter Verwendung eines ersten Verschlüsselungsparameters verschlüsselt ist, und wobei die zweite Stelle unter Verwendung eines zweiten Verschlüsselungsparameters verschlüsselt ist, mit folgenden Merkmalen:

einer Einrichtung (10) zum Verschieben der ersten Stelle des Datenworts an die zweite Stelle des Datenworts;

einer Einrichtung (12) zum Umverschlüsseln der ersten Stelle von einer Verschlüsselung unter Verwendung des ersten Verschlüsselungsparameters in eine Verschlüsselung unter Verwendung des zweiten Verschlüsselungsparameters; und

einer Steuerungseinrichtung (14) zum steuern der Einrichtung (10) zum Verschieben und der Einrichtung (12) zum Umverschlüsseln, so daß die erste Stelle zunächst an die zweite Stelle geschoben und dann umverschlüsselt wird, oder daß die erste Stelle zunächst umverschlüsselt wird und dann an die zweite Stelle geschoben wird.

2. Schiebevorrichtung nach Anspruch 1, bei der die Verschlüsselung der ersten Stelle und der zweiten Stelle unter Verwendung desselben Verschlüsselungsalgorithmus durchgeführt wird, während der erste und der zweite Verschlüsselungsparameter unterschiedlich sind.

3. Schiebevorrichtung nach Anspruch 2, bei der der Verschlüsselungsalgorithmus eine XOR- oder XNOR-Verknüpfung der unverschlüsselten ersten oder zweiten Stelle mit einem Verschlüsselungsparameter aufweist, und bei der die Einrichtung (12) zum Umverschlüsseln angeordnet ist, um eine XOR- bzw. XNOR-Verknüpfung der verschlüsselten ersten Stelle mit einem Umverschlüsselungsparameter durchzuführen, der gleich einer XOR- bzw. XNOR-Verknüpfung des ersten und des zweiten Verschlüsselungsparameters ist.

4. Schiebevorrichtung nach Anspruch 2 oder 3, bei der das Datenwort eine binäre Zahl ist, bei der eine Stelle des Datenworts ein Bit ist, und bei der die XOR- bzw. XNOR-Verknüpfung eine bitweise XOR- bzw. XNOR-Verknüpfung ist.

5. Schiebevorrichtung nach einem der vorhergehenden Ansprüche,
bei der die Einrichtung (12) zum Verschieben einen Multiplexer (32) für jede Stelle aufweist.

6. Schiebevorrichtung nach einem der Ansprüche 3 bis 5, bei der die Einrichtung zum Umverschlüsseln ein XNOR- bzw. XOR-Gatter (20, 21, 22, 23, 30) mit drei Eingängen aufweist, wobei der erste Eingang mit einer verschlüsselten Stelle beaufschlagbar ist, der zweite Eingang mit dem ersten Verschlüsselungsparameter beaufschlagbar ist, und der dritte Eingang mit dem zweiten Verschlüsselungsparameter beaufschlagbar ist.

7. Schiebevorrichtung nach einem der vorhergehenden Ansprüche,
bei der die Einrichtung zum Umverschlüsseln (12) angeordnet ist, um eine Umverschlüsselung durchzuführen, ohne daß ein Zwischenergebnis erzeugt wird, bei dem die erste Stelle in unverschlüsseltem Zustand vorliegt.

8. Schiebevorrichtung nach einem der vorhergehenden Ansprüche, die ferner folgendes Merkmal aufweist:

eine Einrichtung zum Einfügen eines Werts in eine Stelle des Datenworts, die vor der Verschiebung der Stelle belegt war, jedoch nach der Verschiebung der Stelle nicht mehr belegt ist.

9. Schiebevorrichtung nach Anspruch 8, bei der die Einrichtung zum Einfügen des Wertes angeordnet ist, um einen einzufügenden Wert mit dem Verschlüsselungsparameter für diese Stelle zu verschlüsseln, und um den einzufügenden Wert in verschlüsseltem Zustand einzufügen.

10. Verfahren zum Verschieben einer ersten Stelle eines Datenworts, das aus einer Mehrzahl von Stellen besteht, und eine zweite Stelle, um ein verschobenes Datenwort zu erhalten, wobei die erste Stelle unter Verwendung eines ersten Verschlüsselungsparameters verschlüsselt ist, und wobei die zweite Stelle unter Verwendung eines zweiten Verschlüsselungsparameters verschlüsselt ist, mit folgenden Schritten:

Verschieben der ersten Stelle des Datenworts an die zweite Stelle des Datenworts und Umverschlüsseln der verschobenen ersten Stelle von einer Verschlüsselung unter Verwendung des ersten Verschlüsselungsparameters eine Verschlüsselung unter Verwendung des zweiten Verschlüsselungsparameters; oder

Umverschlüsseln der ersten Stelle von einer Verschlüsselung unter Verwendung des ersten Verschlüsselungsparameters in eine Verschlüsselung unter Verwendung des zweiten Verschlüsselungsparameters und Verschieben der unverschlüsselten Stelle des Datenworts an die zweite Stelle des Datenworts.

**Claims**

1. Shift device for shifting a first place of a data word, which consists of a plurality of places, to a second place so as to obtain a shifted data word, wherein the first place is encrypted using a first encryption parameter and wherein the second place is encrypted using a second encryption parameter, comprising:

a unit (10) for shifting the first place of the data word to the second place of the data word;

a unit (12) for re-encrypting the first place from an encryption using the first encryption parameter into an encryption using the second encryption parameter; and

a control unit (14) for controlling the unit (10) for shifting and the unit (12) for re-encrypting so that the first place is first shifted to the second place and is then re-encrypted, or that the first place is first re-encrypted and is then shifted to the second place.

2. Shift device according to claim 1, wherein the encryption of the first place and the second place is performed using the same encryption algorithm, while the first and the second encryption parameters are different.

3. Shift device according to claim 2, wherein the encryption algorithm involves XORing or XNORing of the unencrypted first or second place with an encryption parameter, and
wherein the unit (12) for re-encrypting is arranged to perform XORing or XNORing of the encrypted first place with a re-encryption parameter equal to XORing or XNORing of the first and the second encryption parameter.

4. Shift device according to claim 2 or 3, wherein the data word is a binary number, wherein a place of the data word is a bit, and wherein XORing or XNORing consists of bitwise XORing or XNORing.

5. Shift device according to one of the preceding claims,
wherein the unit (12) for shifting has a multiplexer (32) for each place.

6. Shift device according to one of the claims 3 to 5, wherein the unit for re-encrypting has an XNOR or an XOR gate (20, 21, 22, 23, 30) with three inputs, wherein an encrypted place can be applied to the first input, the first encryption parameter can be applied to the second input, and the second encryption parameter can be applied to the third input.

7. Shift device according to one of the preceding claims,
wherein the unit for re-encrypting (12) is so arranged as to perform re-encryption without an intermediate result being created in which the first place is present in unencrypted state.

8. Shift device according to one of the preceding claims, further comprising:

a unit for inserting a value into a place of the data word that was occupied before shifting the place but is no longer occupied after shifting the place.

9. Shift device according to claim 8, wherein the unit for inserting the value is arranged to encrypt a value for insertion with the encryption parameter for this place, and to insert the value for insertion in encrypted form.

10. Method for shifting a first place of a data word, which consists of a plurality of places, and a second place so as to obtain a shifted data word, wherein the first place is encrypted using a first encryption parameter and wherein the second place is encrypted using a second encryption parameter, with the following steps:

shifting the first place of the data word to the second place of the data word and re-encrypting the shifted first place from an encryption using the first encryption parameter into an encryption using the second encryption parameter; or

re-encrypting the first place from an encryption using the first encryption parameter into an encryption using the second encryption parameter and shifting the unencrypted place of the data word to the second place of the data word.

**Revendications**

1. Dispositif de décalage pour décaler une première position d'un mot de donnée qui est constitué d'une pluralité de positions à une deuxième position pour obtenir un mot de donnée décalé, la première position étant chiffrée en utilisant un premier paramètre de chiffrement, et la deuxième position étant chiffrée en utilisant un deuxième paramètre de chiffrement, le dispositif de décalage comportant les éléments caractéristiques suivantes :

un dispositif (10) pour décaler la première position du mot de donnée à la deuxième position du mot de donnée ;
un dispositif (12) pour recoder la première position en passant d'un chiffrement utilisant le premier paramètre de chiffrement à un chiffrement utilisant le deuxième paramètre de chiffrement ; et
un dispositif de commande (14) pour commander le dispositif de décalage (10) et le dispositif de rechiffrement (12) de sorte que la première position est tout d'abord déplacée à la deuxième position puis est chiffrée ou la première position est tout d'abord chiffrée puis est déplacée à la deuxième position.

2. Dispositif de décalage selon la revendication 1, dans lequel le chiffrement de la première position et de la deuxième position est effectué en utilisant le même algorithme de chiffrement tandis que les premier et deuxième paramètres de chiffrement sont différents.

3. Dispositif de décalage selon la revendication 2, dans lequel l'algorithme de chiffrement comporte une combinaison XOR ou XNOR de la première ou deuxième position non chiffrée par un paramètre de chiffrement, et
le dispositif de rechiffrement (12) est destiné à effectuer une combinaisons XOR ou XNOR de la première position chiffrée par un paramètre de chiffrement qui est égal à une combinaison XOR ou XNOR des premier et deuxième paramètres de chiffrement.

4. Dispositif de décalage selon la revendication 2 ou 3, dans lequel le mot de donnée est un nombre binaire dans lequel une position du mot de donnée est un bit, dans lequel la combinaison XOR ou XNOR est une combinaison XOR ou XNOR bit par bit.

5. Dispositif de décalage selon l'une des revendications précédentes, dans lequel le dispositif de décalage (12) comporte un multiplexeur (32) pour chaque position.

6. Dispositif de décalage selon l'une des revendications 3 à 5, dans lequel le dispositif de rechiffrement comporte une porte XOR ou XNOR (20, 21, 22, 23, 30) à trois entrées, une position chiffrée étant appliquée à la première entrée, le premier paramètre de chiffrement étant appliqué à la deuxième entrée, et le deuxième paramètre de chiffrement étant appliqué à la troisième entrée.

7. Dispositif de décalage selon l'une des revendications précédentes, dans lequel le dispositif de chiffrement (12) est destiné à réaliser un rechiffrement sans générer de résultat intermédiaire dans lequel la première position se trouve dans un état non chiffré.

8. Dispositif de décalage selon l'une des revendications précédentes, qui comporte en outre les éléments caractéristiques suivants :

un dispositif d'insertion d'un mot à une position du mot de donnée qui était occupée avant le décalage de la position mais qui n'est plus occupée après le décalage de la position.

9. Dispositif de décalage selon la revendication 8, dans lequel le dispositif d'insertion de la valeur est destiné à coder une valeur à insérer par le paramètre de chiffrement pour cette position et à insérer le mot à insérer dans un état chiffré.

**10.** Procédé de décalage d'une première position d'un mot de donnée, qui est constitué d'une pluralité de positions, à une deuxième position pour obtenir un mot de données décalé, la première position étant chiffrée en utilisant un premier paramètre de chiffrement, et la deuxième position étant chiffrée en utilisant un deuxième paramètre de chiffrement, ledit procédé comportant les étapes suivantes consistant à :

décaler la première position du mot de donnée à la deuxième position du mot de donnée et recoder la première position décalée en passant d'un chiffrement utilisant le premier paramètre de chiffrement à un chiffrement utilisant le deuxième paramètre de chiffrement ; ou recoder la première position en passant d'un chiffrement utilisant le premier paramètre de chiffrement à un chiffrement utilisant le deuxième paramètre de chiffrement et décaler la position non chiffrée du mot de donnée à la deuxième position du mot de donnée.

10

$d'_0$ o——$k_0$—— $2^0$

$d'_1$ o——$k_1$—— $2^1$ → | Einrichtung zum Verschieben |

$d'_2$ o——$k_2$—— $2^2$

12

$d'_3$ o——$k_3$—— $2^3$ → | Einrichtung zum Umverschlüsseln |

$d'_4$ o——$k_4$—— $2^4$

⋮

| Steuerung |——14

16 ——o ↑ Schiebebetrag

18 ——o ↑ Schlüssel $k_0$, $k_1$, $k_2$, $k_3$, ...

$2^0$ ——$k_0$—— o

$2^1$ ——$k_1$—— o

$2^2$ ——$k_2$—— o   $(d'_0)$

$2^3$ ——$k_3$—— o   $(d'_1)$

$2^4$ ——$k_4$—— o   $(d'_2)$

⋮

## FIG 1

FIG 2

FIG 3